# EUROPEAN PATENT APPLICATION

(11) **EP 4 280 293 A2**
(43) Date of publication of application: **22.11.2023**
(21) Application number: 22201706.3
(22) Date of filing: 14.10.2022
(51) Int. Cl.: H01M 4/00

(54) **AUTOMATED BATTERY ASSEMBLY SYSTEMS AND RELATED METHODS, INCLUDING METHOD OF SECURING CONTACT TABS**

(30) Priority: 14.10.2021 US 202163255949 P
(71) Applicant: ATS Automation Tooling Systems Inc., Cambridge, Ontario N3H 4R7 (CA)
(72) Inventor: Zwirner, Thomas C., Ontario, N3H 4R7 (CA); Gazarek, Brian Steven, Ontario, N3H 4R7 (CA)
(74) Representative: Brand Murray Fuller LLP

(57) **Abstract**

Various assemblies for a battery are provided herein. An example assembly for a battery includes a first component having a first contact tab and a second component having a second contact tab. The first contact tab having a first bend profile and the second contact tab having a second bend profile. The first and second bend profiles are selected to provide an engaged portion therebetween.

## Description

### CROSS-REFERENCE TO RELATED APPLICATIONS

This application claims the benefit of U.S. Provisional Patent Application No. 63/255,949 filed on October 14, 2021. The entire contents of U.S. Provisional Patent Application No. 63/255,949 is hereby incorporated by reference for all purposes.

### FIELD

The described embodiments relate to systems and methods for assembling batteries, and in particular, to systems and methods for assembling batteries in an automated process in which contact tabs of multiple cathodes of anodes are secured together.

### BACKGROUND

Some battery technologies have a layered structure with multiple electrode plates stacked together. Such battery technologies are commonly used in electric vehicles and energy grid storage. As the world transitions away from fossil fuels and towards more sustainable electrification, the demand for such batteries is growing.

Batteries can be assembled in a traditional assembly line in which an unfinished battery is moved to multiple stations for the assembly of various battery components. In some cases, only one component is added to the unfinished battery at each station, resulting in a large number of stations to complete a battery having a layered structure. Each station along the assembly line increases the floor space required for the assembly line. However, adding different components at a single station can increase complexity and production time.

Moreover, in some cases electrically connecting different portions of a battery (such as the anodes or cathodes of a battery) can be cumbersome.

### SUMMARY

The various embodiments described herein generally related to methods (and associated systems configured to implement the methods) for assembling batteries in an automated process.

In accordance with a broad aspect, there is provided an automated battery assembly system. The system includes a closed-loop transport track, a plurality of stations along the track, and a control system. The closed-loop transport track includes a plurality of pallets. Each pallet receives at least one battery stack and is moveable along the track. The plurality of stations include a plurality of assembly stations for adding at least one battery component to a battery stack held on a pallet, and at least one transfer station for unloading a completed battery stack from the pallet. The completed battery stack includes a plurality of cells having a particular composition. The control system moves the pallets to the plurality of stations in a predetermined sequence to assemble the completed battery stack. The predetermined sequence can include a plurality of revolutions around the track. Each of the battery cells include at least one of a cathode plate, an anode plate, and a separator plate. The particular composition relates to an arrangement of the at least one of a cathode plate, an anode plate, and a separator plate between a lower plate and an upper plate.

In at least one embodiment, the at least one battery component can be added to the battery stack in each revolution of the predetermined sequence.

In at least one embodiment, the at least one transfer station can load a carrier to the pallet.

In at least one embodiment, an assembly station can load a lower plate to a carrier on the track.

In at least one embodiment, the at least one transfer station loading a carrier to a pallet can include the at least one transfer station loading the carrier to the pallet with a lower plate being held therein.

In at least one embodiment, the at least one transfer station unloading the completed battery stack from the track can include the at least one transfer station unloading the carrier from the track, the completed battery stack being held therein.

In at least one embodiment, the at least one battery component added by an assembly station can be one of a cathode plate, an anode plate, a separator plate, a block, a pass through conductor, a block-mounting flange, the lower plate, or the upper plate.

In at least one embodiment, the control system can reduce the speed of the pallets as the pallets approach the assembly station to receive a battery component.

In at least one embodiment, the control system can stop the pallets at an assembly station to receive a battery component and then resume the movement of the pallets after the battery component is added to the battery stack.

In at least one embodiment, the control system can move the plurality of pallets around the track synchronously. In at least one embodiment, the control system can move the plurality of pallets around the track asynchronously.

In at least one embodiment, the battery stack can receive battery components in a specific order in each revolution of the predetermined sequence.

In at least one embodiment, the battery stack can receive battery components in a different specific order in each revolution of the predetermined sequence.

In at least one embodiment, the number of the plurality of pallets can be greater than the number of the plurality of assembly stations.

In at least one embodiment, the track can include a plurality of pallets, the plurality of pallets receiving at least one carrier.

In at least one embodiment, each of the battery cells can further include a second separator plate.

In at least one embodiment, the particular composition can include the anode plate on top of the lower plate, a first separator plate on top of the anode plate, the cathode plate on top of the first separator plate, and a second separator plate on top of the cathode plate.

In accordance with another broad aspect, an automated method of mass assembling battery stacks is provided. The method involves moving a plurality of pallets to a plurality of stations located along a closed-loop transport track in a predetermined sequence. The plurality of stations include a plurality of assembly stations and at least one transfer station. The predetermined sequence includes a plurality of revolutions around the track. The method further involves receiving, on the plurality of pallets, a plurality of battery components from the plurality of assembly stations to assemble a plurality of battery stacks. Each battery stack of the plurality of battery stacks includes a plurality of cells, each cell of the plurality of cells having a particular composition. Each of the cells includes at least one of a cathode plate, an anode plate, and a separator plate. The particular composition is an arrangement of the at least one of a cathode plate, an anode plate, and a separator plate between a lower plate and an upper plate. The method also involves unloading, by the at least one transfer station, the plurality of battery stacks from the plurality of pallets.

In at least one embodiment, the method can further involve adding, by the plurality of stations, at least one battery component to the battery stack in each revolution of the predetermined sequence.

In at least one embodiment, the method can further involve loading, by the at least one transfer station, a carrier to the pallet.

In at least one embodiment, the method can further involve loading, by an assembly station, a lower plate to the carrier on the track.

In at least one embodiment, the method can further involve loading, by the at least one transfer station, the carrier to the pallet, the carrier with a lower plate being held therein.

In at least one embodiment, the method can further involve unloading, by the at least one transfer station, the carrier from the track, the completed battery stack being held therein.

In at least one embodiment, the method can further involve adding, by an assembly station, the at least one battery component, wherein the at least one battery component is one of a cathode plate, an anode plate, a separator plate, a block, a pass through conductor, a block-mounting flange, the lower plate, or the upper plate.

In at least one embodiment, the method can further involve reducing the speed of the pallets as they approach the assembly station to receive a battery component.

In at least one embodiment, the method can further involve stopping the pallets at an assembly station to receive a battery component and moving the pallets after the battery component is added to the battery stack.

In at least one embodiment, the method can further involve moving the plurality of pallets around the track synchronously.

In at least one embodiment, the method can further involve moving the plurality of pallets around the track asynchronously.

In at least one embodiment, the method can further involve receiving the battery components in a specific order in each revolution of the predetermined sequence.

In at least one embodiment, the method can further involve receiving the battery components in a different specific order in each revolution of the predetermined sequence.

In at least one embodiment, the number of the plurality of pallets can be greater than the number of the plurality of assembly stations.

In at least one embodiment, the track can include a plurality of pallets, the plurality of pallets receiving at least one carrier.

In at least one embodiment, each of the battery cells can further include a second separator plate.

In at least one embodiment, the particular composition can include the anode plate on top of the lower plate, a first separator plate on top of the anode plate, the cathode plate on top of the first separator plate, and the second separator plate on top of the cathode plate.

### BRIEF DESCRIPTION OF THE DRAWINGS

Several embodiments will now be described in detail with reference to the drawings, in which:
FIG. 1 is a schematic diagram of an example automated battery assembly system, in accordance with an embodiment;
FIG. 2A is a perspective view of an example carrier, in accordance with an embodiment;
FIG. 2B is a perspective view of the carrier of FIG. 2A holding an unfinished battery stack;
FIG. 2C is a perspective view of the carrier of FIG. 2A holding a completed battery stack;
FIG. 3 is a view of an example battery cell, in accordance with an embodiment;
FIG. 4 is a schematic diagram of another example automated battery assembly system, in accordance with an embodiment;
FIG. 5 is a flowchart of an example method for assembling a battery, in accordance with an embodiment;
FIG. 6 is a schematic of a tab bending machine according to another embodiment;
FIG. 7 is a schematic of an assembly having two anodes according to one embodiment;
FIG. 8 is a schematic of an assembly having two cathodes according to one embodiment;
FIG. 9 is a schematic of an assembly having three anodes according to another embodiment; and
FIG. 10 is a schematic of an assembly having three cathodes according to another embodiment.

The drawings, described below, are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

### DESCRIPTION OF VARIOUS EMBODIMENTS

The various embodiments described herein generally relate to automated battery assembly systems and related methods. In some examples, the various embodiments described herein generally relate to automated systems and related methods of assembling a battery having a layered structure.

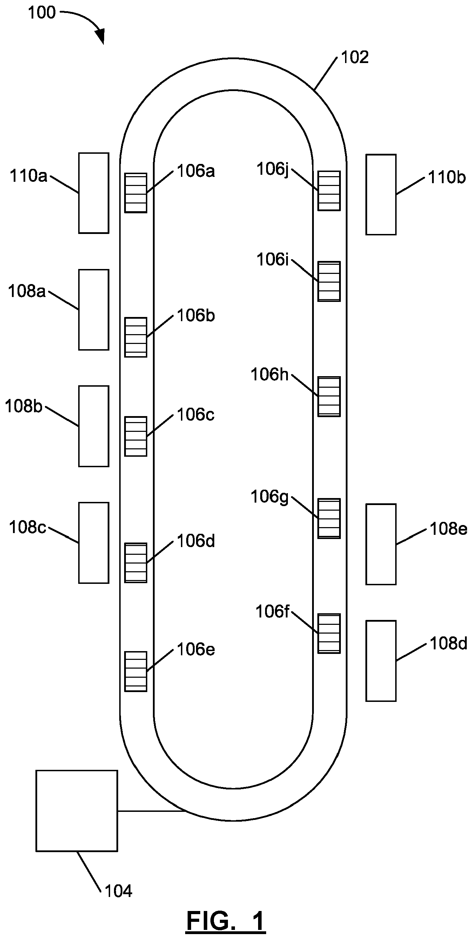

Reference is now made to FIG. 1, which shows a schematic diagram of an example automated battery assembly system 100. The automated battery assembly station includes a closed-loop transport track 102, a control system 104, and a plurality of stations 108a, 108b, 108c, 108d, and 108e, (hereinafter referred to as "108a-e"), 110a and 110b (hereinafter referred to as "110a-b") located adjacent to the closed-loop transport track 102. Although example system 100 is shown with seven stations 108a-e, 110a-b, fewer or more stations can be included. Although stations 108a-e, 110a-b are shown as being located around the closed-loop transport track 102, any one or more stations can be located within the closed-loop transport track 102.

The closed-loop transport track 102 can move one or more unfinished battery stacks among the plurality of stations 108a-e, 110a-b to successively assemble the battery stacks. Furthermore, the unfinished battery stacks can be moved to complete multiple revolutions around the closed-loop transport track 102 for assembly. In at least one embodiment, the closed-loop transport track 102 can be a conveyor.

In at least one embodiment, pallets, such as pallets 106a, 106b, 106c, 106d, 106e, 106f, 106g, 106h, 106i, and 106j (hereinafter referred to as "pallets 106a-j"), can be mounted to the closed-loop transport track 102 to receive and transport the battery stacks. The pallets 106a-j can be fixedly mounted to the conveyor. As shown in FIG. 1, there can be 10 pallets 106a-j on the conveyor. However, any number of pallets 106a-j can be included. Although FIG. 1 shows a greater number of pallets 106a-j than stations 108a-e, 110a-b, there can be fewer pallets than stations, or an equal number of pallets and stations. Furthermore, each pallet 106a-j can receive and transport one or more battery stacks.

In at least one embodiment, pallets 106a-j can receive battery stacks held in carriers. That is, the pallets 106a-j can receive and transport carriers holding battery stacks therein.

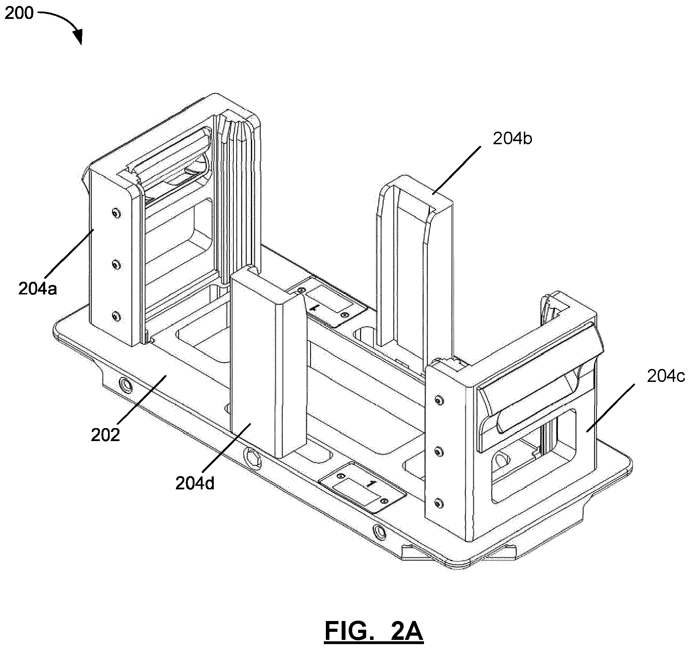

Reference is now made to FIGS. 2A to 2C, which shows an example carrier 200. As can be seen, carrier 200 can include a platform 202 on which the electrode plates can be placed. Carrier 200 can also have plurality of vertically extending members 204a-204d to hold the electrode plates in the area between the vertically extending members 204a-204d. That is, the vertically extending members 204a-204d can retain the battery stack on the platform 202 as the carrier 200 is moved along the closed-loop transport track 102. Although carrier 200 is shown with four vertically extending members 204a-204d, fewer or more vertically extending members can be provided.

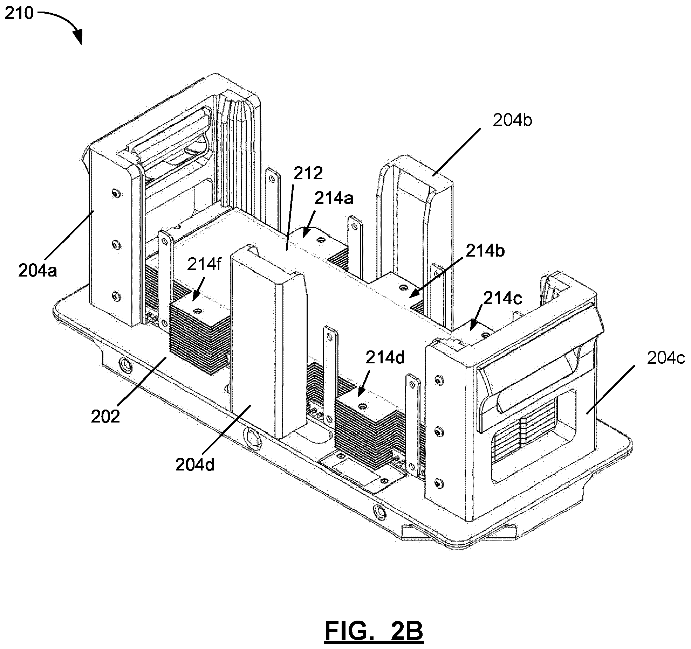

In FIG. 2B, the example carrier 200 holds an example unfinished battery stack 212. As shown, the unfinished battery stack 212 can include multiple plates layered on top of one another. Each plate can be, for example, an anode plate, a cathode plate, or a separator plate. The number of plates and the particular order or sequence of the plates can vary, depending on the battery being assembled.

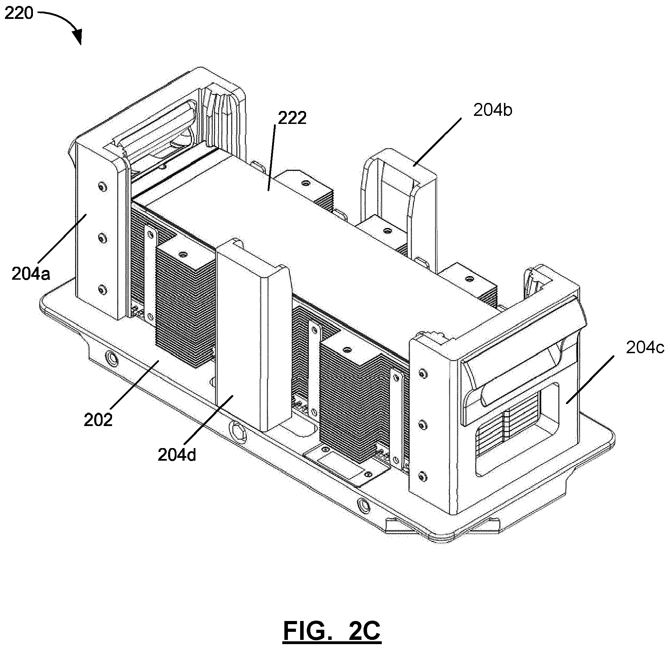

In at least one embodiment, the plates of the battery stack can have a particular shape. For example, the plates of battery stack 212 has tabs 214a, 214b, 214c, 214d, and 214f. The plurality of vertically extending members 204a-204d can be located on the platform 202 in a manner that corresponds to the geometry of the battery stack 212. This can ensure that the plates of the battery stack are properly aligned with one another. In FIG. 2C, the example carrier 200 hold an example completed battery stack 222.

Returning now to FIG. 1, the control system 104 can be configured to operate the closed-loop transport track 102 and the plurality of stations 108a-e, 110a-b. In some examples, the control system 104 can move the pallets 106a-j along the closed-loop transport track 102 synchronously, where each pallet 106a-j is moved at the same speed. For example, the control system 104 can move all pallets 106a-j to a station 108a-e, 110a-b around the closed-loop transport track 102 and stop all pallets 106a-j at the respective stations 108a-e, 110a-b. The control system 104 can then move all pallets 106a-j to the next respective station 108a-e, 110a-b around the closed-loop transport track 102.

In some examples, the control system 104 can move the pallets 106a-j along the closed-loop transport track 102 asynchronously, where each pallet 106a-j is moved independently of one another. For example, the control system 104 can move pallet 106a to station 108a and pallet 106b to station 108b. The process performed on a battery stack at station 108a may take less time than the process performed on a battery stack at station 108b. The control system 104 may then move pallet 106a from station 108a to station 108b, where it will then stop and wait for station 108b to complete the loading of the battery component to pallet 106b. After the battery component is loaded to pallet 106b, the control system 104 may move pallet 106b from station 108b to station 108c and move pallet 106a to station 108b to receive another battery component. This process may occur with any of the pallets 106a-j and any of the stations 108a-e, 110a-b.

The control system 104 can control the speed of the pallets 106a-j as they are moved amongst the plurality of stations 108a-e, 110a-b. In at least one embodiment, the control system 104 can bring the pallets 106a-j to a stop at the stations 108a-e, 110a-b so that the stations 108a-e, 110a-b can process the unfinished battery. In at least one embodiment, the stations 108a-e, 110a-b can process the unfinished battery while it is in motion. For example, the control system 104 can reduce the speed of the pallets 106a-j as they approach the stations 108a-e, 110a-b to allow the stations 108a-e, 110a-b to process the unfinished battery 108a-e. In another example, the pallets 106a-j are not slowed down in order to be processed. That is, the pallets 106a-j may travel between stations 108a-e, 110a-b at a speed that allows the stations 108a-e, 110a-b to process the unfinished battery.

In at least one embodiment, a pallet 106a-j may not require processing at one or more stations 108a-e, 110a-b. For example, the control system 104 can control the pallets 106a-j to bypass one or more of the plurality of stations 108a-e, 110a-b without the one or more stations 108a-e, 110a-b processing the unfinished battery.

The plurality of stations 108a-e, 110a-b located around the closed-loop transport track 102 can be assembly stations 108a-e, transfer stations 110a-b, or a combined assembly and transfer station (not shown). An assembly station 108a-e can process a battery stack by, for example, adding a battery component to an unfinished battery stack after the pallet 106a-j carrying the unfinished battery stack arrives at the assembly station 108a-e. In another example, assembly stations 108a-e can perform other functions, such as trimming or welding battery components on the pallet 106a-j or testing portions of the unfinished or completed battery stack (e.g., leak testing).

In at least one embodiment, an assembly station 108a-e can process an unfinished battery stack by loading a particular battery component to a pallet 106a-j. For example, a first assembly station 108a can add an anode plate to a battery stack while a second assembly station 108b can add a separator plate to the battery stack and a third assembly station 108d can add a cathode plate to the battery stack. In at least one embodiment, an assembly station 108a-e can load multiple battery components to a pallet 106a-j. For example, assembly stations 108b and 108d can add two separator plates and two cathode plates respectively to the battery stack.

In at least one embodiment, an assembly station 108a-e can load different battery components to a pallet 106a-j in different instances. For example, assembly station 108c can add a block to a pallet 106a-j during a first revolution around the closed-loop transport track 102 and add a mounting flange to the same pallet 106a-j during a subsequent revolution around the closed-loop transport track 102. The pallets 106a-j can complete multiple revolutions around the closed-loop transport track 102 before the battery stack is completed.

In at least one embodiment, an assembly station 108a-e can process more than one battery stack at a time. For example, a pallet 106a-j can carry more than one battery stack and the assembly station 108a-e can carry more than one of the same component. The assembly station 108a-e can add battery components to the plurality of stacks successively, without having to pick-up additional battery components, or reload the assembly station 108a-e with additional battery components. In another example, an assembly station 108a-e can receive more than one pallet 106a-j. Similarly, the assembly station 108a-e can add battery components to the plurality of stacks on the plurality of pallets successively, without having to pick-up additional battery components, or reload the assembly station 108a-e with additional battery components.

In at least one embodiment, a transfer station 110a-b can transfer the battery stacks to and from the pallets 106a-j. For example, a transfer station 110a-b can unload a completed battery stack from a pallet 106a-j. The completed battery stack can be unloaded from the pallet 106a-j with the carrier 200 holding the completed battery stack therein. 108a-e. In another example, a transfer station 110a-b can load a carrier 200 onto a pallet 106a-j. In some examples, a transfer station 110a-b both perform both loading and unloading operations.

In some examples, a transfer station 110a-b can unload the completed battery stack from the carrier 200 itself. That is, the carrier 200 can remain on the pallet 106a-j of the closed-loop transport track 102. The pallet 106a-j holding the carrier can then be moved, by the control system 104, to an assembly station 108a-e to begin another battery stack.

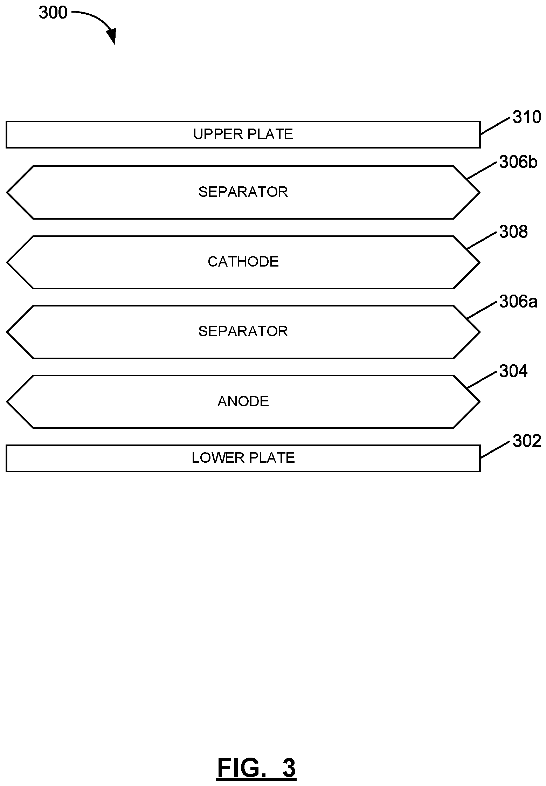

Reference is now made to FIG. 3, which is an illustration of an example battery cell 300. The battery cell 300 has a lower plate 302 and an upper plate 310. The composition of the battery cell 300 between the lower plate 302 and the upper plate 310 can vary. As shown in FIG. 3, the battery cell 300 includes, from the bottom up, an anode plate 304, a first separator plate 306a, a cathode plate 308, and a second separator plate 306d. In other embodiments, fewer or more electrodes can be included. For example, another battery stack may include two separator plates between anode plate 304 and cathode plate 308, two separator plates on top of the cathode plate 308, or two cathode plates instead of only one cathode plate. As well, the order of the electrodes can be different. For example, separator plate 306b can instead be positioned on top of separator plate 306a and below cathode plate 308.

Although not shown in FIG. 3, battery cells 300 can also include additional components, such as but not limited to blocks, insulators (e.g., thin insulator blocks, thick insulator blocks), conductors (e.g., feed through conductors), flanges (e.g., block-mounting flanges), nuts, studs, or tubes.

A battery stack can include a plurality of battery cells. For example, a battery stack can include 18 battery cells, such as example battery cell 300. To assemble a battery stack, the pallet 106a-j can make multiple revolutions around the closed-loop transport track 102 to complete multiple the battery cells 300. At various points during the assembly of the battery stack, additional battery components such as feed through conductors and/or a block-mounting flanges can be added. Such additional battery components may connect the battery cells 300.

The control system 104 can move the pallets 106a-j in multiple revolutions around the closed-loop transport track 102, wherein the revolutions can include different stops at assembly stations 108a-e each time. For example, pallet 106a, on the first revolution around the closed-loop transport track 102, can stop at assembly stations 108a and 108b to receive certain battery components on the battery stack. On the second revolution around the closed-loop transport track 102, pallet 106a can stop at assembly stations 108c and 108d to receive different battery components on the battery stack. In some examples, each pallet 106a-j can have the same required stops at each assembly station 108a-e during each revolution around the closed-loop transport track. In some examples, each pallet 106a-j can have a different set of required stops at each assembly station 108a-e during each revolution around the closed-loop transport track.

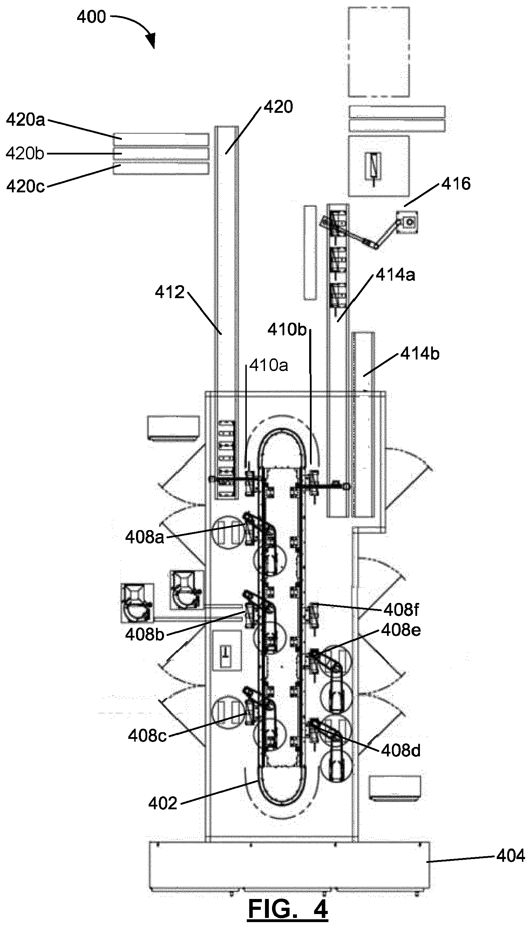

Referring now to FIG. 4, which shows a schematic diagram of another example automated battery assembly system 400. Similar to example system 100, the automated battery assembly station can include a closed-loop transport track 402, a control system 404, and a plurality of stations located adjacent to the closed-loop transport track 402. The plurality of stations can include assembly stations 408a, 408b, 408c, 408d, 408e and 408f, (hereinafter referred to as "408a-f') and transfer stations 410a and 410b (hereinafter referred to as "410a-b"). Although example system 400 is shown with eight stations 408a-f, 410a-b, fewer or more stations can be included. Similar to system 100, although system 400 is shown with stations 408a-f, 410a-b located around the closed-loop transport track 402, any one or more stations can be located within the closed-loop transport track 402.

Similar to transfer stations 110a-b, transfer station 410a can load an unfinished battery stack to the closed-loop transport track 402. For example, transfer station 410a can load a carrier, such as example carrier 200, to a pallet, such as pallet 106a-j, on the closed-loop transport track 402. In at least one embodiment, the carrier 200 can be empty. In other embodiments, the carrier 200 can contain one or more battery components therein, such a lower plate 302.

In at least one embodiment, the unfinished battery stack can be transported to the transfer station 410a by an input transport track 412. As shown in FIG. 4, the input transport track 412 can be a linear conveyor. The input transport track 412 can transport the carrier 200 from a supply station 406. The supply station 406 can provide one or more components 406a, 406b, 406c of the unfinished battery stack to the input transport track 412, such as carriers 200 and lower plates 302 contained therein.

The system 400 can operate in manner similar to system 100 and assemble battery stacks with a plurality of battery cells, such as the example battery cell 300 shown in FIG. 3.

Similar to transfer stations 110a-b, transfer station 410b can unload a completed battery stack, such as completed battery stack 222, from a pallet on the closed-loop transport track 402. In at least one embodiment, transfer station 410b can unload the completed battery stack 222 from the carrier 200 on the pallet. In other embodiments, transfer station 410b can unload the carrier 200 from the pallet with the completed battery stack 222 held therein.

Transfer station 410b can unload the completed battery stack 222 to a first output transport track 414a. The first output transport track 414a can transport the completed battery stack 222 away from transfer station 410b. As shown in FIG. 4, the first output transport track 414a can be a linear conveyor. In at least one embodiment, the first output transport track 414a can transport the carrier 200 with the completed battery stack 222 held therein to an additional assembly station 416. Similar to assembly stations 408a-f, the completed battery stack can be further processed at assembly station 416.

In at least one embodiment, additional battery components can be added to the battery stack at assembly station 416. For example, an upper plate 310 can be added to the battery stack at assembly station 416. In other embodiments, the upper plate 310 can be added by assembly stations 408a-f while the battery stack is on the closed-loop transport track and no further assembly is performed on the completed battery stack 222 after it is unloaded from the closed-loop transport track 402. The first output transport track 414a can transport the completed battery stack 222 to a collection location, such as a cart.

In at least one embodiment, the transfer station 410b can include sensors for inspecting or testing the completed battery stack to determine if the completed battery stack should be rejected for being incorrectly assembled or not meeting various quality control requirements. If the completed battery stack is a reject, the transfer station 410b can unload the reject to a second output transport track 414b instead of first output transport track 414a. As shown in FIG. 4, the second output transport track 414b can be a linear conveyor, such as a gravity conveyor. The second output transport track 414b can transport rejects to a collection location, such as a bin.

In at least one embodiment, the additional assembly station 416 can perform the inspection or testing and load the completed battery stack to a respective collection location.

In at least one embodiment, a single transport track (not shown) can serve as both the input transport track 412 and the first output transport track 414a. For example, a single transport track can transport an empty carrier 200 to the closed-loop transport track 402 and transport a carrier holding a completed battery stack 222 therein from the closed-loop transport track 402.

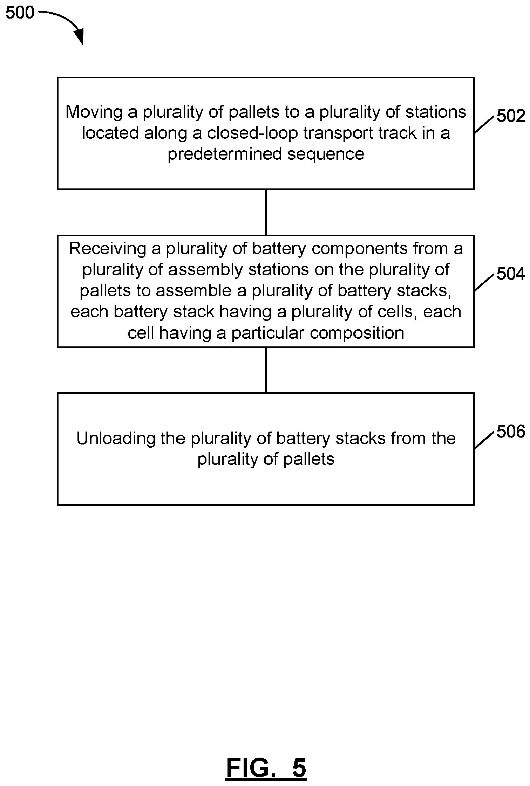

Referring now to FIG. 5, illustrated is a method 500 for assembling a battery. Method 500 can be implemented by an automated battery assembly system, such as system 100 or system 400.

The method 500 can involve, at step 502, moving a plurality of pallets, such as pallets 106a-j, to a plurality of stations, such as stations 108a-e, 110a-b located along a closed-loop transport track, such as track 102, in a predetermined sequence. The plurality of stations can include a plurality of assembly stations, such as stations 108a-e, and at least one transfer station, such as stations 110a-b. The predetermined sequence includes a plurality of revolutions around the track 102.

At 504, the method can involve receiving, on the plurality of pallets 106a-j, a plurality of battery components from the plurality of assembly stations 108a-e to assemble a plurality of battery stacks. Each battery stack of the plurality of battery stacks includes a plurality of cells. Each cell of the plurality of cells has a particular composition.

In at least one embodiment, receiving battery components on the plurality of pallets 106a-j at step 504 can involve adding at least one battery component to the battery stacks in each revolution of the predetermined sequence. The at least one battery component can be added by an assembly station 108a-e. Example battery components include, but are not limited to cathode plates, anode plates, separator plates, blocks, pass through conductors, block-mounting flanges, lower plates, and upper plates.

Each of the cells can include at least one of a cathode plate, an anode plate, and a separator plate. For example, a cell can include at least one anode plate, two cathode plates, and four separator plates. The particular composition relates to an arrangement of the at least one of a cathode plate, an anode plate, and a separator plate between a lower plate, such as lower plate 302, and an upper plate, such as upper plate 310. As shown in FIG. 3, an example cell composition can be an anode plate, such as anode plate 304, on top of the lower plate 302, a first separator plate, such as separator plate 306a on top of the anode plate 304, a cathode plate, such as cathode plate 308, on top of the first separator plate 306a, and a second separator plate, such as separator plate 306b, on top of the cathode plate 308.

In at least one embodiment, the method 500 can involve reducing the speed of the pallets 106a-j as they approach an assembly station 108a-e to receive a battery component. That is, battery components can be loaded to battery stacks while in motion. Alternatively, the pallets 106a-j can be brought to a full stop at an assembly station 108a-e to receive battery component on the battery stacks at step 504.

In at least one embodiment, the battery components can be received in a specific order in each revolution of the predetermined sequence. For example, the battery components received in one revolution can form a single battery cell. As such, the predetermined sequence for assembling a battery stack can include a plurality of revolutions, the number of revolutions corresponding to the number of cells included in the battery stack.

In at least one embodiment, the battery components can be received in a different specific order in each revolution of the predetermined sequence. For example, the battery components required for a single battery cell may require more than one revolution. For example, a first revolution can include a first separator, an anode, and a second separator and a second revolution can include a third separator, a cathode, and a fourth separator. As such, the predetermined sequence for assembling a battery stack can include a plurality of revolutions, the number of revolutions corresponding to twice the number of cells included in the battery stack.

In at least one embodiment, the plurality of pallets 106a-j can be moved around the track synchronously. That is, each of the plurality of pallets 106a-j can be moved amongst the stations 108a-e, 110a-b at the same time.

In at least one embodiment, the plurality of pallets 106a-j can be moved around the track asynchronously. That is, a pallet 106a-j can be moved from a station at anytime, irrespective of whether other pallets 106a-j have been processed by their respective stations. In this manner, once a station has completed processing on a battery stack, the pallet 106a-j for the battery stack can be moved to another station. In some cases, there can be a queue at the stations to process unfinished battery stacks.

At step 506, the method 500 can involve unloading, by the at least one transfer station 110a-b, the plurality of battery stacks from the plurality of pallets 106a-j. In at least one embodiment, each completed battery stack can be held in a carrier, such as carrier 200, and unloading the plurality of battery stacks 222 can involve unloading the carriers with the battery stack 222 held therein from the track 202. In other embodiments, the completed battery stack, such as completed battery stack 222, can be unloaded from the pallet 106a-j without the carrier 200.

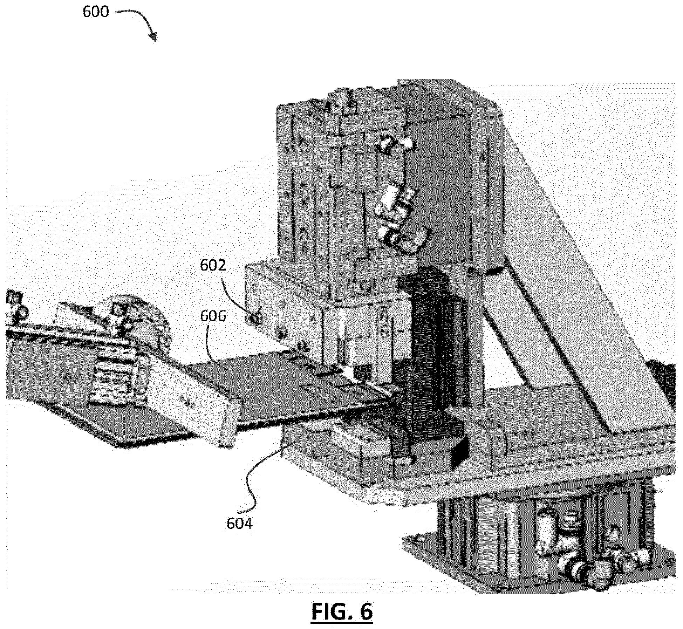

Turning now to FIG. 6, illustrated therein is a tab bending machine 600 according to another embodiment. In particular, the bending machine 600 may be configured to provide one or more bends to one or more contact tabs of the a battery to ensure that multiple components can be joined together. For example, the bending machine 600 may be used to provide bends to contact tabs of a first cathode and a second cathode such that those contact tabs can be electrically connected together.

As shown, in one configuration the bending machine 600 includes an upper jaw 602 and a cooperating lower jaw 604. During bending, a workpiece 606 (such as the contact tab of a particular anode or cathode) is received between the jaws 602, 604. The jaws 602, 604 can then be closed (such as by the operation of an electric motor, using hydraulic pressure, and so on), and the jaws 602, 604 are sized and shaped to impart a desired bending shape to the workpiece 606. This can allow, for example, contact tabs of multiple anodes or cathodes to be more easily electrically connected to each other.

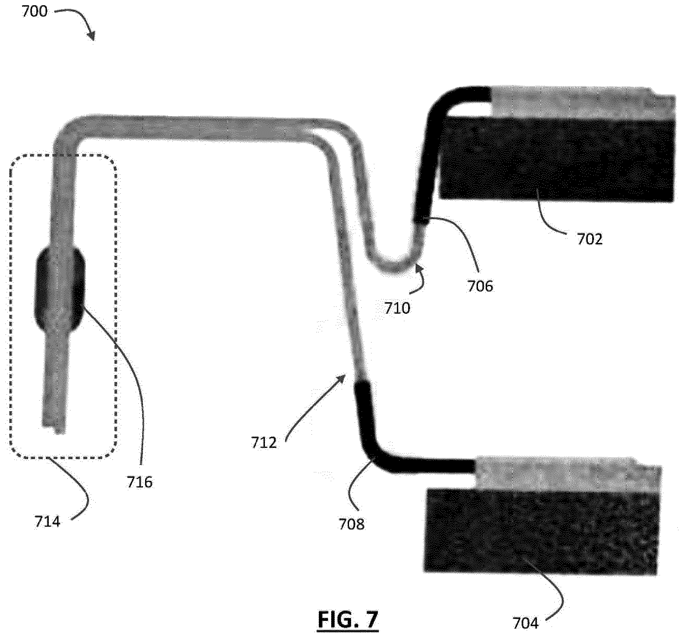

For example, FIG. 7 shows an assembly 700 having two anodes 702, 704 according to one embodiment. In particular, the first anode 702 has a first contact tab 706, while the second anode 704 has a second contact tab 708. The first tab 706 has been bent to with a first bend profile 710, while the second tab 708 has been bent with a second bend profile 712 (i.e., using the bending machine 600). The bend profiles 710, 712 are selected so that when the anodes 702, 704 are stacked, their contact tabs 706, 708 will have an engaged portion 714 in which the contact tabs 706, 708 are in close contact. This can allow the contact tabs 706, 708 to be welded together (i.e., at weld 716) such as by using a spot welder. At the same time, the bend profiles 710, 712 tend to avoid mechanical interference between the contact tabs 706, 708, and may help avoid undesired contact, which could trigger unwanted shorts and the like.

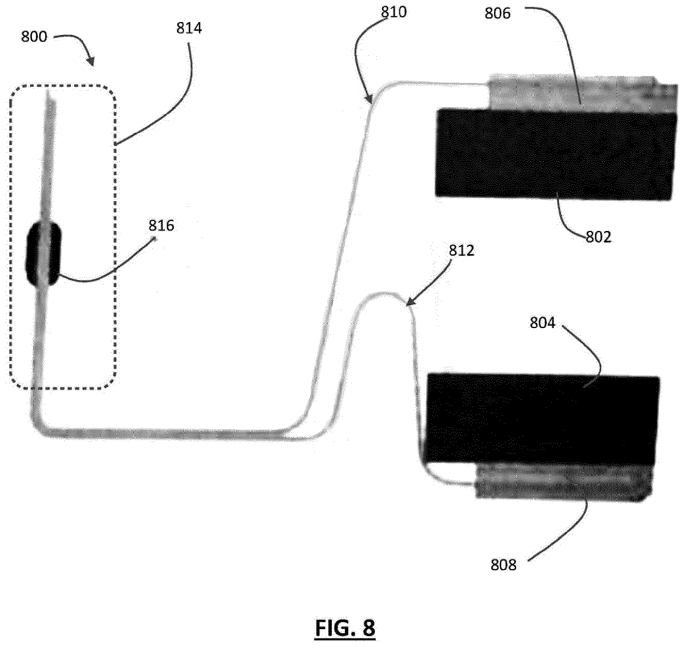

FIG. 8 shows a similar schematic of another assembly 800 having two cathodes 802, 804 according to another embodiment. As shown the contact tabs 806, 808 of the cathodes 802, 804 have different bend profiles 810, 812 that cooperate to provide an engaged portion 814, which can be useful for electrically connecting the cathodes 802,804, such as via a weld 816.

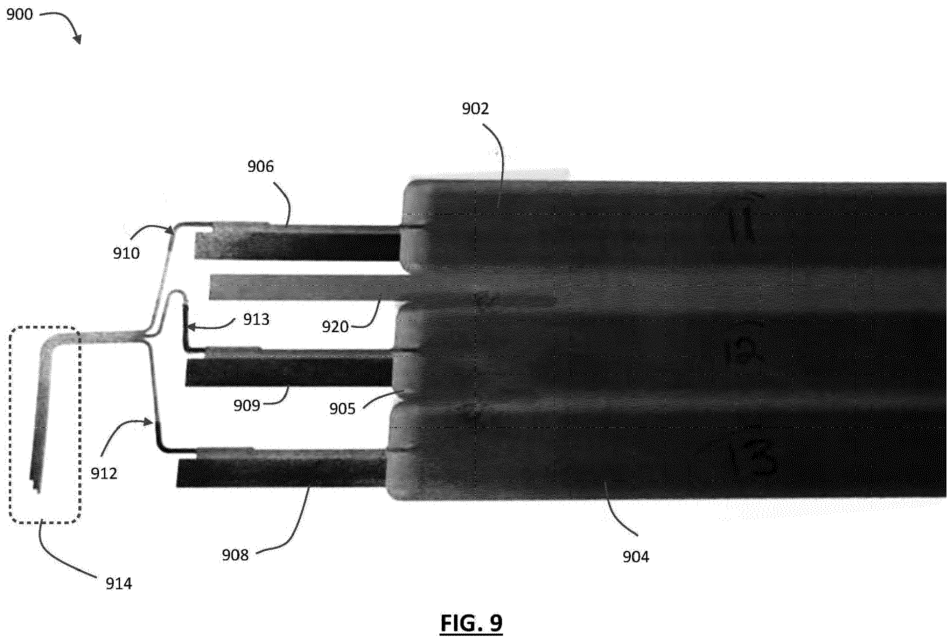

Turning now to FIG. 9, illustrated therein is a schematic of an assembly 900 having three anodes 902, 904, 905 according to another embodiment. In general, the assembly 900 is similar to the assemblies 700 and 800 described above, except for the addition of a third anode or cathode. In particular, the anodes 902, 904, 905 as shown each have a contact tab 906, 908, 909, each having a bend profile 910, 912, 913 which are selected so as to provide for an engaged portion 914 to help ensure good electrical connections between the anodes 902, 904, 905.

In some versions, one or more of the anodes may have separator plates therebetween, such as the separator plate 920 in between anodes 902, 904.

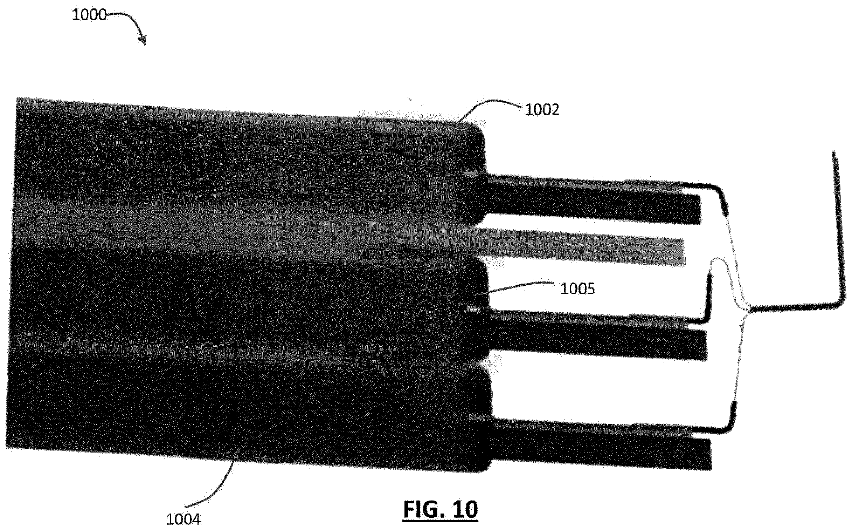

FIG. 10 is a similar assembly 100 except having three cathodes 1002, 1004, 1005 according to another embodiment. Similar cooperating bends are provided in the contact tabs thereof to ensure good electrical connections can be made.

For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps. In addition, numerous specific details are set forth in order to provide a thorough understanding of the exemplary embodiments described herein. However, it will be understood by those of ordinary skill in the art that the embodiments described herein may be practiced without these specific details. In other instances, well-known methods, procedures and components have not been described in detail so as not to obscure the embodiments generally described herein. Furthermore, this description is not to be considered as limiting the scope of the embodiments described herein in any way, but rather as merely describing the implementation of various embodiments as described.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that the term "coupled" used herein indicates that two elements can be directly coupled to one another or coupled to one another through one or more intermediate elements.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface.

For example, and without limitation, the control system (referred to below as computing devices) may be a server, network appliance, embedded device, computer expansion module, a personal computer, laptop, personal data assistant, cellular telephone, smart-phone device, tablet computer, a wireless device or any other computing device capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented as hardware, software, and combination thereof.

Program code may be applied to input data to perform the functions described herein and to generate output information. The output information is applied to one or more output devices, in known fashion.

Each program may be implemented in a high level procedural or object oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g. ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Various embodiments have been described herein by way of example only. Various modification and variations may be made to these example embodiments. Also, in the various user interfaces illustrated in the drawings, it will be understood that the illustrated user interface text and controls are provided as examples only and are not meant to be limiting. Other suitable user interface elements may be possible.

## Claims

1. An assembly for a battery comprising:
a. a first component having a first contact tab, the first contact tab having a first bend profile; and
b. a second component having a second contact tab, the second contact tab having a second bend profile;
c. wherein the first and second bend profiles are selected to provide an engaged portion therebetween.

2. The assembly of claim 1 wherein the contact tabs are welded together within the engaged portion.

3. The assembly of claim 1 further comprising a third component having a third contact tab, the third contact tab having a third bend profile selected to cooperate with the engaged portion.

4. The assembly of claim 1 wherein the first and second components are cathodes.

5. The assembly of claim 4 further comprising a third cathode having a third contact tab, the third contact tab having a third bend profile selected to cooperate with the engaged portion.

6. The assembly of claim 1 wherein the first and second components are anodes.

7. The assembly of claim 6 further comprising a third anode having a third contact tab, the third contact tab having a third bend profile selected to cooperate with the engaged portion.

8. A method for assembling a battery, the method comprising:
a. bending a first contact tab of a first component according to a first bend profile;
b. bending a second contact tab of a second component according to a second bend profile;
c. stacking the second component on the first component such that an engagement portion of the second bend profile of the second contact tab cooperates with an engagement portion of the first bend profile of the first contact tab.

9. The method of claim 8 further comprising welding the engagement portions of the contact tabs together.

10. The method of claim 8 further comprising:
a. bending a third contact tab of a third component according to a third bend profile; and
b. stacking the third component on the second component such that an engagement portion of the third bend profile of the third contact tab cooperates with the engagement portion of the second bend profile of the second contact tab.

11. The method of claim 8 further comprising providing a separator between the first and the second components.

12. The method of claim 8 wherein the first and second components are cathodes.

13. The method of claim 12 further comprising:
a. bending a third contact tab of a third cathode according to a third bend profile; and
b. stacking the third cathode on the second cathode such that an engagement portion of the third bend profile of the third contact tab cooperates with the engagement portion of the second bend profile of the second contact tab.

14. The method of claim 8 wherein the first and second components are anodes.

15. The method of claim 14 further comprising:
a. bending a third contact tab of a third anode according to a third bend profile; and
b. stacking the third anode on the second anode such that an engagement portion of the third bend profile of the third contact tab cooperates with the engagement portion of the second bend profile of the second contact tab.
